# EUROPEAN PATENT SPECIFICATION

(11) **EP 1 849 366 B1**
(45) Date of publication and mention of the grant of the patent: **02.09.2009**
(21) Application number: 07002725.5
(22) Date of filing: 08.02.2007
(51) Int. Cl.: A22B 5/00

(54) **Device for the simultaneous extraction of the spinal cord, the dura mater, the origin of the nervous tissue and the dorsal root ganglia, in cavity, from all kinds of livestock.**
Vorrichtung zur gleichzeitigen Extraktion des Rückenmarks, der Dura Mater, der Ansätze des Nervengewebes und der dorsalen Wurzelganglien, in der Kavität, von allen Vieharten.
Dispositif d'extraction simultanée de la moelle épinière, la dure-mère, l'origine du tissu nerveux et du ganglion de la racine postérieure, dans la cavité, pour toutes sortes de bétail

(30) Priority: 28.04.2006 ES 200601095
(43) Date of publication of application: 31.10.2007
(73) Proprietor: Extracción de Médulas y Complementos, S.L., 17457 Campllong Gerona (ES)
(72) Inventor: Catafau Riera, Jaume, 17457 Campllong (Girona) (ES)
(74) Representative: Maldonado Jordan, Julia

(56) References cited:
- DE-A1- 10 137 816
- DE-A1- 10 207 386
- FR-A- 2 889 414
- FR-A1- 2 759 866
- FR-A1- 2 852 206

## Description

### Aim of the invention

This invention relates to a device for the simultaneous extraction of the spinal cord, the dura mater, the origin of the nervous tissue and the dorsal root ganglia, in cavity, from all kinds of livestock, avoiding the removal of the vertebral column from old beef cattle.

### Background to the invention

French patent application no. 0303103, published as FR 2852206, describes a device for the simultaneous extraction of the spinal cord and the dura mater in cavity from all kinds of livestock. Said device comprises a traction cable, having a diameter smaller than that of the animal's medullar cavity, and fitted with multiple radial cutting edged blades coaxial to the cable, provided regularly in the longitudinal direction and with bags placed between the blades. Said cable is activated by a traction mechanism, provided with a geared motor and drive pulley and at least one loose toothed wheel adapted to engage with the various blades with which the cable is provided. In said French patent application No. 0303103, the blades have decreasing diameters and the diameter of at least the main blade is larger than the inner diameter of the animal's medullar cavity, so that when traction is applied to the cable, which is inserted into the spinal cord, the blades rip away the spinal cord and the spinal pachymenix, dragging said torn organic material to an exit end of the vertebral column.

This device, although it fulfills the intended aim, suffers from some drawbacks when used, in particular, in that the blades associated with the traction cable and which are responsible for scratching and extracting the dura mater or pachymenix, have a cutting edge at their front end, which digs into the bone, making it difficult for the blades to advance and causing the bone to break and tear off.

On the other hand, the said blades, depending on the size of the animal and the section of the medullar cavity, can, in some areas, leave parts of the dura mater, the origin of the nervous tissue and the dorsal root ganglia whereby the risk of transmitting disease to humans through consumption is not totally eliminated.

In order to resolve these drawbacks, the device described in Spanish Patent application No. 200501450, published as ES 2288072, in the same name as the applicant of this invention, contemplates covering the front area of the traction cable with rounded barrels, providing blades at the rear end with a diameter that decreases towards the nearest end, and incorporating, as a continuation of the traction cable, a second combined traction and rotation cable, which has a milling cutter associated at its rear end for totally removing the spinal cord, dura mater, the nerve endings and the dorsal root ganglia, and even milling or polishing the bone surrounding the medullar cavity.

One of the drawbacks in using this device is that the high number of barrels and blades arranged on the traction cable considerably increases the traction effort that needs to be applied to the animal in order to make said cable advance along the inside of the medullar cavity.

When using this device, the animal is hanging from the slaughter establishment's own conveyor train, which is usually calculated to support a certain weight per linear meter, of the order of 1000 kg /meter. The weight of the animal added to the traction strength needed to make the traction cable advance inside the medullar cavity, can be near the train's loading limit, with the subsequent risk that its support and guiding elements are deteriorated or broken.

Therefore, a first objective is to considerably reduce the efforts transmitted to the slaughter establishment's conveyor train when using the device used for emptying the animal's medullar cavity.

The device of said patent application No. 200501450 comprises a support structure on which a traction mechanism is assembled for activating one of the cables, in particular the traction cable, a combined traction and rotation mechanism for activating the other cable, and a device for holding the lower end of the animal, to prevent it from swinging.

Using a traction mechanism, and a combined traction and rotation mechanism, implies a duplicated construction, which complicates the device in question and increases its manufacturing cost.

On the other hand, incorporating the device for holding the lower end of the animal on the said support structure is a drawback vis-à-vis the cleaning and maintenance tasks, and also makes it difficult for the operator to access the work area.

Said patent application No. 200501450 contemplates that the structure has two lower pulleys for guiding the traction cable and the rotation and traction cable respectively, and two upper pulleys, rotating freely, for respectively guiding the traction cable and the traction and rotation cable towards the area for introducing said cables into the animal's medullar cavity.

This combination of pulleys, in addition to implying a construction complication, also has the drawback that the cables can come into contact with the slaughter establishment's kill floor in the section between the animal and the lower pulleys, since said pulleys do not have any means to prevent this contact. By the cables coming into contact with the kill floor, they become dirty and contaminated, and therefore suitable conditions of hygiene cannot be guaranteed.

Said patent application No. 200501450 contemplates that the lower end of the animal is held by a scissor-type device, activated by a hydraulic or pneumatic cylinder and which surrounds the animal preventing it from swinging, said device incorporating a concave attachment head for connecting and housing a part of the animal's lower end.

The combination of the side holding device with the device fitted with the connection head for the animal's lower end, said devices being activated by a single cylinder, has the drawback when used of not being able to correctly attach different size animals, since depending on the proportion between the animal's length and perimeter, only the side holding device or the head connection device will work adequately.

### Description of the invention

The device that is the object of this invention has a series of particular construction features aimed at allowing a correct sideways attachment of the animal hanging from the slaughter establishment belt or conveyor, preventing it from swinging while the spinal cord is being removed.

Another objective of the invention is to apply to the animal's lower end an upwards vertical thrust, sufficient to compensate at least partially the weight of said animal and the downwards force transmitted by the cable carrying the milling cutters during the operation to empty the medullar cavity, so as to reduce the effort to be supported by the slaughter establishment belt conveyor train or element.

Another objective of the invention is to allow the cable to be guided from when it exits the animal as far as an activating module that transmits a rotation and traction movement to said cable, without said cable coming into contact with the kill floor, avoiding the risk of dirtying or contaminating said cable, therefore guaranteeing suitable cable hygiene conditions.

Another aim of the invention is to simplify in construction terms the means required to transmit the simultaneous advance and rotation movement to the cable carrying the milling cutter during the operational stage of the work cycle.

Another objective is to considerable reduce the number of elements mounted on the traction cable in order to minimize the effort required to displace it through the inside of the animal's medullar cavity.

Therefore the device of the invention has a modular structure, comprising: a module for compensating the vertical efforts produced by the weight of the animal and the action of the cable on the animal, an activating module for simultaneously producing the longitudinal displacement and rotation of the cable carrying the milling cutter during the operational stage of the work cycle, a module for guiding the cable between the compensating module and the activating module, preventing said cable from coming into contact with the kill floor and a control module, which can be remote controlled, and which controls the speeds and rotation directions of the activating module motors, which produce the displacement and rotation of the cable during the operational stage.

The module for compensating the vertical effort produced by the weight of the animal and by the traction of the cable, comprises a table provided with a hole for inserting the animal's head, said table being mounted on a height regulating mechanism. When the table is raised, once the animal reaches the work area, the animal's head or lower end is housed in the hole in the table, said table transmitting to said head or lower end a sufficient upward thrust to compensate, at least partially the weight of the animal and the downward effort that will be transmitted by the cable carrying the milling cutter during the emptying of the medullar cavity, preventing said efforts from being transmitted to the conveyor and to the actual slaughter establishment equipment.

The hole in the table can have a side opening to facilitate the insertion or extraction of the animal's head.

Said vertical effort compensating module is provided at the bottom with a tray for collecting the risk materials extracted from the animal's medullar cavity by the action of the milling cutter, as it descends inside said medullar cavity.

The activating module, for producing the longitudinal displacement and rotation of the cable carrying the milling cutter, comprises: vertical guides attached to an anchoring base and a displaceable carriage, which are mounted on the vertical guides by means of side support rollers which enable the vertical displacement. The activating module is covered externally, at least at the bottom thereof, by a protection grid, in order to prevent the operator from accidentally accessing the area where the displaceable carriage circulates.

According to the invention the vertical guides are made up of at least two attachable sections, so that they can be dismantled and to facilitate the transport and assembly tasks.

Said activating module is provided at the top area of the rollers with a motorized enroller, for the vertical displacement of the carriage by means of a traction cable or chain. Said activating module comprises a motor for rotationally activating the cable. Said motor is attached directly to the displaceable carriage.

The cable guiding module, arranged between the vertical effort compensating module and the activating module, comprises an inner passage limited at the top by a track of freely rotating rollers and at the bottom by a concave shaped protection element or trim. Said passage is provided with a suction conduit for extracting the risk materials extracted from the animal's medullar cavity. The said lower protection element is to be made preferably from polypropylene with a nitrile coating to facilitate the introduction of the cable in the inner passage of said guiding module.

Said lower protection element prevents the cable carrying the milling cutter from coming into contact with the kill floor and becoming contaminated in the trajectory between the animal and the activating module.

The rollers track can cover the whole length of the inner passage or only those curved sections where the cable applies a side thrust against the inner passage, without, in this case, any rollers being provided in the straight sections that are not subject to side thrusts from the cable.

The cable guiding module is provided on the inside with water jets for cleaning the cable as it exits the animal and passes inside the module.

In addition, said guiding module can be provided at the top, above the roller track, with a port, either continuous or discontinuous, to facilitate accessing and cleaning said rollers, for example with high pressure water.

In accordance with the invention, the activating cable comprises a first section long enough to cover the distance between the vertical effort compensating module and the bottom of the motor's vertical trajectory, and a second section carrying a single milling cutter at its rear end. Said second section of cable is long enough to cover the vertical distance between the conveyor train and the vertical effort compensating module, which guarantees that said length is enough to cover the total length of the medullar cavity of the animals to be handled. Said sections are provided at their opposite ends with complementary means including quick attachment for connecting and disconnecting.

The first section of the cable does not carry milling cutters or any other additional elements, such as blades or barrels, and only have quick attachment means at their ends that are needed for connecting them to the motor and with the second section of the cable, whereby, structurally speaking, they are far less complicated than in the case in patent No. 200501450 in the name of the same owner.

In addition, it is worth highlighting that said first section of the cable acts only as an advance and rotation transmission element between the motor and the second section, and therefore never accesses the inside of the animal, therefore eliminating the traction required in patent No. 200501450 to advance the first section of the cable through the inside of the animal's medullar cavity.

The second section of the cable is provided with a single milling cutter, integrated at its rear end, said milling cutter having a larger diameter than the section of the medullar cavity of the type of animals to be handled.

The control module is arranged in a box mounted on the activating module and comprises, in addition to the necessary electrical connections, a PLC so as to program the speeds of the motors that produce the displacement of the carriage on the vertical guides and the rotation of the milling cutter associated with the cable in the various work stages.

During the operational stage of the work cycle, in other words when the carriage is in ascent, the advance and rotation speeds are fixedly related so as to guarantee that the animal's medullar cavity is milled correctly, whereas during the non-operational return stage, in other words when the carriage is in descent, the carriage's advance speed is greater and prevents the milling cutter from rotating, since it is outside the animal, with this increase in the return speed making it possible to minimize the time of the complete work cycle including the operational stage and the non-operational, return stage.

Said control module comprises at least two end of stroke detectors arranged in areas next to the upper and lower ends of the vertical guides of the activating module.

When said top end of stroke detector is activated by the carriage, during its ascent, it sends the PLC a signal which automatically produces the changeover from the operational stage to the non-operational return stage, inverting the displacement direction of the carriage, and stopping the cable's rotational movement. When the lower end of stroke detector is activated by the motor, during its descent, it sends a signal to the PLC which automatically stops the activating module.

The control module is provided with a radio frequency remote control, which makes it considerably easier for the operator to activate it, deactivate it or stop urgently it from any nearby position and prevent unnecessary movements by the operator.

The characteristics described permit the simultaneous extraction of the spinal cord, dura mater, origin of the nervous tissues and the dorsal root ganglia from the animal in an easy manner and in a minimum period of time, also facilitating the subsequent, habitual longitudinal cutting operation of the animal in the middle of the vertebral column.

Once the animal is immobilized and part of the weight is compensated by the vertical effort compensating module, in order to pass the second section of the cable, carrying the milling cutter, through the inside of the medullar cavity, it is enough to make a hole in the animal's sacrum area, which is hanging from the slaughter establishment's actual conveyor train, manually introduce into said hole the front end of the second section of the cable and pass it, from top to bottom, through the inside of the medullar cavity, until said cable end exits the medullar cavity, at a sectioned area of the animal's neck.

Next the opposite ends of the first and second section of the cable are attached together, said sections being found in the vertical effort compensating module and the activating module is activated with the remote control so that the milling cutter attached to the second section rotates as it descends through the inside of the medullar cavity, cutting and widening said medullar cavity, which guarantees the complete and simultaneous extraction of the spinal cord, the dura mater, the origin of the nervous tissues and the dorsal root ganglia of the animal.

When the milling cutter has exited the animal and the displaceable carriage activates the upper end of stroke detector, the carriage quickly descends to the lower position, ready for a new work cycle.

As its passes through the inside of the guiding module, the cable is washed with water sprayed by the jets, removing the material impregnated on it.

Once the cycle has been completed, the operator disconnects the first and the second sections of the cable, the ends of which are in the vertical effort compensating module and uses a new second section to repeat the operation with the following animal.

The used second cable sections are removed to a container or area where they are subsequently cleaned and reused, thus optimizing the time used on each animal.

The material extracted from each animal falls down into the collection container arranged in the vertical effort compensating module and is removed using the slaughter establishment's own suction means.

### Description of the figures

To complement the description provided, and in order to facilitate understanding of the characteristics of the invention, a set of drawings is attached to this specification, in which, the following has been represented, in an illustrative, non-limiting manner:
- Figure 1 shows a top plane view of the different modules of the device in the working position, the activating module being sectioned along its horizontal plane.
- Figure 2 shows a side view of the vertical effort compensating module.
- Figure 3 shows a front view of the vertical effort compensating module, partially sectioned.
- Figure 4 shows a profile view of the cable guiding module sectioned along its vertical plane.
- Figure 5 shows a top plane view of the cable guiding module.
- Figure 6 shows a profile view of the activating module partially sectioned, the cable guiding module and the activating cable, with the second section of the cable, carrying the milling cutters, being shown disconnected from the first section.
- Figure 7 shows a partial elevation view of the activating cable with the front and rear sections disconnected.

### Preferred embodiment of the invention

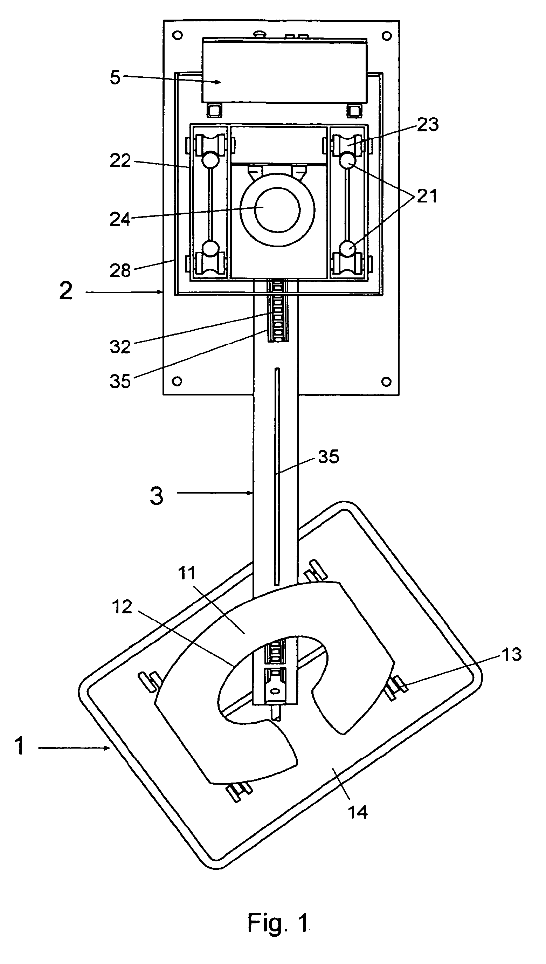

In the embodiment shown in Figure 1, the following can be seen, arranged in the working position: the vertical effort compensating module (1), the activating module (2) for activating the cable carrying the milling cutters, and the guiding module (3) of cable (4).

Compensating module (1) comprises a table (11) provided with a hole (12), open at the side, for introducing the animal's head and aligning it vertically with one of the end holes in the cable guiding module (3). Table (11) is mounted on a height regulating mechanism (13), shown in the attached figures by means of a scissors type mechanism activated by a horizontal cylinder.

Said vertical effort compensating module (1) is provided at the bottom with a tray (14) for collecting the risk materials extracted from the animal's medullar cavity.

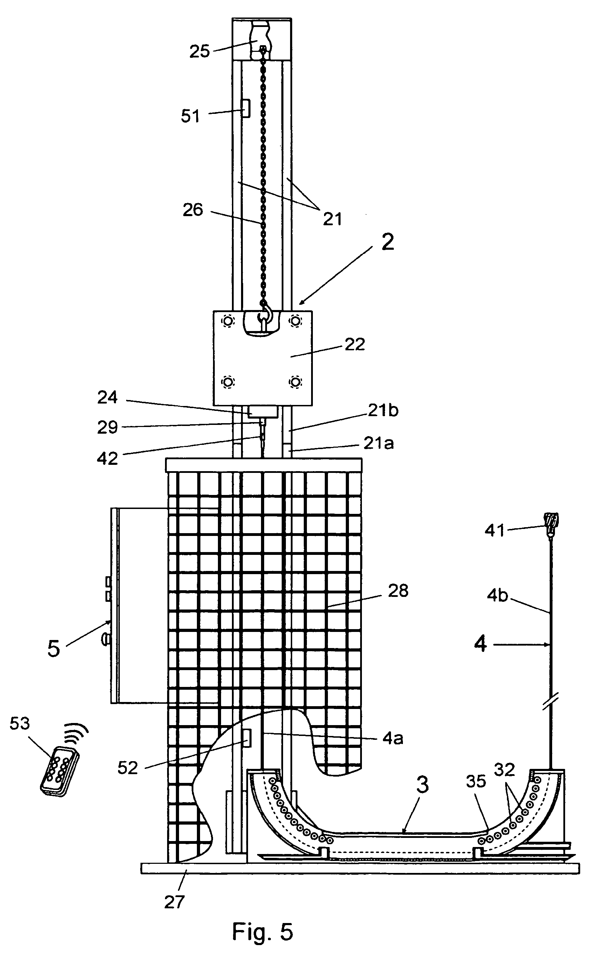

The activating module (2) shown in Figures 1 and 5, comprises vertical guides (21) attached to an anchoring base (27) and made up of two sections (21a, 21b) that can be connected together.

A bottom portion of activating module (2) is covered externally by a protection grid (28).

On vertical guides (21), there is arranged, by means of side rollers (23), a displaceable carriage (22) supporting the motor (24) that rotationally activates cable (4).

On the top end of vertical guides (21) a motorized enroller (25) is provided that displaces displaceable carriage (22), by means of a traction cable or chain (26), along vertical guides (21).

Said activating module (2) includes the control module (5) for controlling the device.

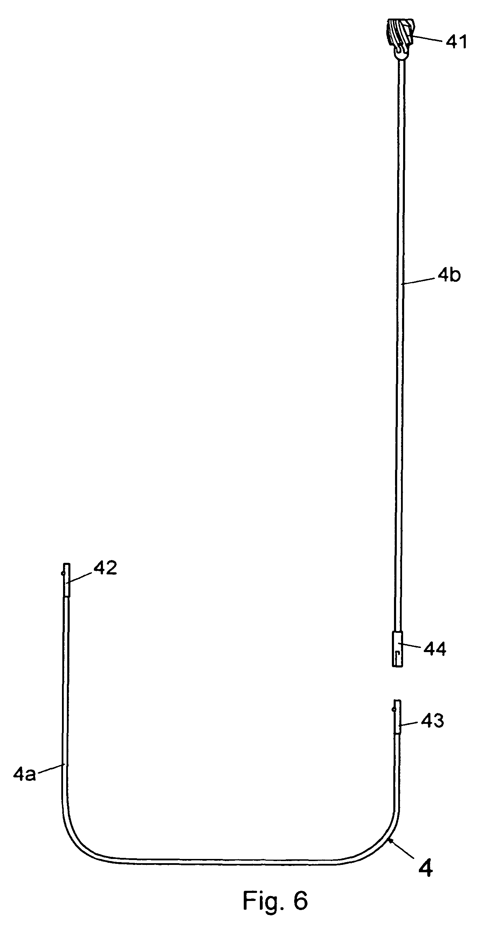

The motor (24) is provided on its axis with a quick attachment (29) for connecting cable (4), shown in Figure 6, activating module (2) thus communicating to said cable (4) a traction effort, when carriage (22) moves upwards, and a rotational movement owing to the action of said motor (24).

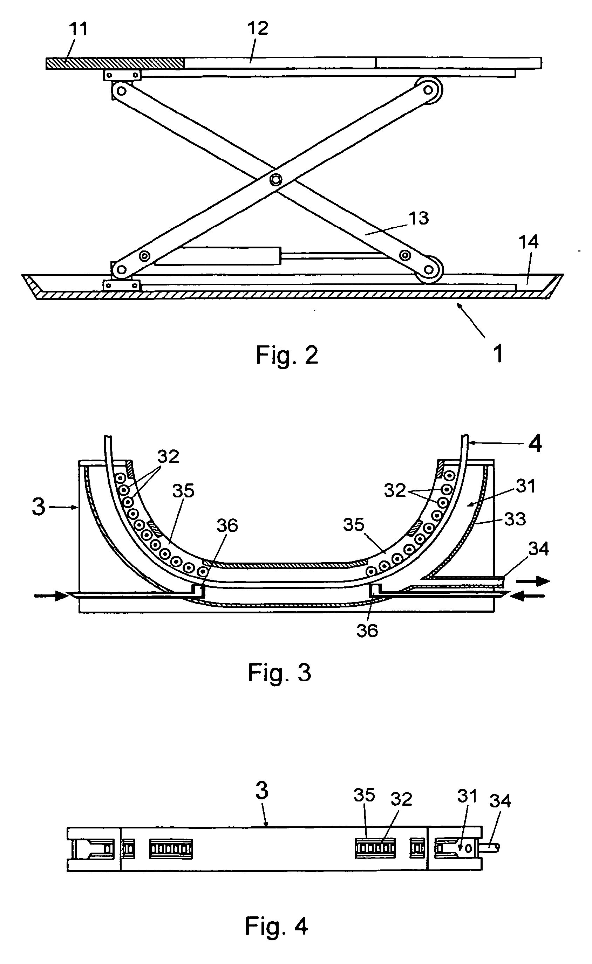

Cable guiding module (3), shown in Figures 1, 3, 4, and 5, and arranged between compensating module (1) and activating module (2), comprises an inner passage (31) for cable (4) to pass through. Said passage (31) is limited at the top by freely rotating rollers (32) for supporting cable (4), and at the bottom by a protection element or trim (33) that prevents cable (4) from coming into contact with the kill floor.

Lower protection element (33), made from polypropylene with a nitrile coating, defines a concave shape and is provided at the entrance of said passage with a suction duct (34) for removing the risk materials extracted from the animal's medullar cavity.

Said guiding module (3) has at the top a series of ports (35) to make it easier to clean rollers (32), and inside pressurized water jets (36) for cleaning the cable and in inner passage (31) a suction duct (34) for removing the risk materials extracted from the animal's medullar cavity.

Cable (4), shown in Figure 6, comprises a first section (4a) and a second section (4b) provided with complementary quick attachment means (43, 44) for their mutual connection and disconnection.

The first section (4a), having a length similar to the distance between vertical effort compensating module (1) and the bottom of the vertical trajectory of motor (24), is provided at its front end with a quick attachment (42) complementary to quick attachment (29) of said motor (24). Said motor (24) is vertically aligned with one of the ends of the inner passage of guiding module (3) of cable (4).

The first section (4a) of the cable has a noticeably constant thickness, since it does not carry any milling cutters, barrels or other elements, except the end quick attachment means mentioned above, whereas the second section (4b) of cable (4) is provided at its rear end with a single milling cutter (41) for cleaning the animal's medullar cavity with a combined advance and rotation movement.

The second section (4b) of the cable has a similar length to the distance between the conveyor train and vertical effort compensating module (1), to guarantee that its length is greater than that of the medullar cavity of the animal's to be handled.

Control module (5) of the device comprises a PLC and at least two end of stroke detectors (51, 52) arranged in areas next to the upper and lower ends of vertical guides (21) of activating module (2), so that it can be activated by displaceable carriage (22) in its ascent and descent along vertical guides (21).

Said control module (5) is provided with a radio frequency remote control (53) so that it can be activated remotely by the operator.

With the elements described, in order to empty the medullar cavity of the animal, conveniently held by compensating module (1), the first section (4a) of the cable is passed through inner passage (31) of the guiding module and is connected by means of quick attachment (42) to quick attachment (29) of motor (24), said motor (24) being at the bottom of its trajectory. The front end of the second section (4b) of the cable passes in a descending direction through the inside of the animal's medullar cavity and the quick attachments (43, 44) of first section (4a) and second section (4b) of the cable, are attached. Next control module (5) is activated by remote control (53), with the PLC simultaneously causing the elevation of carriage (22), with the consequent advance of milling cutter (41) through the inside of the medullar cavity, and the activation of motor (24) that transmits a rotational movement to cable (4) and to milling cutter (41) associated thereto. When milling cutter (41) exits the medullar cavity at the bottom and displaceable carriage (22) activates the top end of stroke detector (51), said detector (51) sends a signal to the PLC to cause carriage (22) to automatically descend at a greater speed than the ascending speed and to stop motor (24).

When carriage (22) activates bottom end of stroke detector (52), said detector (52) causes the device to stop, and the operator has to free the second section (4b) of the cable and use another clean second section (42b) to repeat the work cycle with the next animal.

Once the nature of the invention has been described sufficiently, as well as a preferred embodiment, it is noted to this end that the materials, shape, size and arrangement of the elements described can be modified, providing that this does not alter the essential characteristics of the invention claimed below.

## Claims

1. Device for the simultaneous extraction of the spinal cord, dura mater, the origin of the nervous tissue and the dorsal root ganglia, in cavity, of all kinds of livestock; said device being of the type that includes: a cable (4) carrying milling cutters (41) for extracting the spinal cord and the spinal pachymenix of the animal by milling, means for transmitting to cable (4) a rotation and advance movement, and means for holding the lower end of the animal in the hanging position; **characterized in that** it comprises:
- a compensating module (1) for the vertical effort produced by the weight of the animal and by the traction of the cable (4), said compensating - module (1) comprising a table (11) provided with a hole (12) for introducing the animal's head and arranged on a height regulating mechanism (13) of table (11).
- an activating module (2) for producing the longitudinal and rotational movement of cable (4) carrying milling cutter (41), said activating module (2) comprising: vertical guides (21) attached to an anchoring base (27), a displaceable carriage (22) arranged on vertical guides (21) by side support rollers (23), a motorized enroller (25), attached to the top area of the guides, for moving the carriage vertically (22) by means of a traction cable or chain (26), and a motor (24) for rotationally activating cable (4),
- a guiding module (3) for the cable between compensating module (1) and activating module (2), said guiding module (3) comprising an inner passage (31) limited at the top by freely rotating rollers (32), and
- a control module (5), which can be activated remotely.

2. Device, according to claim 1, **characterized in that** vertical effort compensating module (1) is provided at the bottom with a tray (14) for collecting the risk materials extracted from the animal's medullar cavity.

3. Device, according to claim 1, **characterized in that** hole (12) in table (11) has a side hole for introducing and removing the animal's neck.

4. Device, according to claim 1, **characterized in that** hole (12) in table (11) is vertically aligned with one of the end holes of guiding module (3) of cable (4).

5. Device, according to claim 1, **characterized in that** activating module (2) is covered externally, at least at the bottom thereof, with a protective grid (28).

6. Device, according to claim 1, **characterized in that** vertical guides (21) are made up of at least two sections (21 a, 21b) that can connect to one another.

7. Device, according to claim 1, **characterized in that** motor (24) is attached to displaceable carriage (22).

8. Device, according to claim 1, **characterized in that** cable guiding module (3) is provided on the inside with a series of pressurized water jets (36) for cleaning cable (4).

9. Device, according to claim 1, **characterized in that** rollers (32) of guiding module (3) are arranged only in the curved sections of inner passage (31).

10. Device, according to claim 1, **characterized in that** inner passage (31) of cable guiding module (3) is provided with a suction duct (34) for extracting the risk materials extracted from the animal's medullar cavity.

11. Device, according to claim 1, **characterized in that** inner passage (31) of guiding module (3) is limited at the bottom by a concave shaped protection element or trim (33).

12. Device, according to claim 1, **characterized in that** cable guiding module (3) has at the top, above the track of rollers (32), at least one port (35) for accessing and cleaning said rollers (32).

13. Device, according to claim 1, **characterized in that** cable (4) comprises a first section (4a) and a second section (4b) carrying milling cutter (41).

14. Device, according to claim 13, **characterized in that** first section (4a) and second section (4b) of the cable comprise complementary quick attachment means (43, 44) for their mutual connection and disconnection.

15. Device, according to claim 13, **characterized in that** first section (4a) of the cable has a similar length to the distance between vertical effort compensating module (1) and the bottom of the vertical trajectory of motor (24).

16. Device, according to claim 13, **characterized in that** second section (4b) of the cable has a similar length to the distance between the conveyor train and compensating module (1).

17. Device, according to claim 13, **characterized in that** milling cutter (41) is arranged on the rear end of second section (4b) of the cable.

18. Device, according to claim 13, **characterized in that** first section (4a) of the cable has at its front end a quick attachment (42) for its connection to a quick attachment (29) on motor (24).

19. Device, according to claim 1, **characterized in that** control module (5) is arranged in a box mounted on activating module (2).

20. Device, according to claim 1, **characterized in that** control module (5) includes a PLC for controlling the device.

21. Device, according to claim 1, **characterized in that** control module (5) comprises at least two end of stroke detectors (51, 52) connected to the PLC, arranged in areas next to the top and bottom ends of vertical guides (21) of activating module (2), and which can be activated by displaceable carriage (22) in its ascent and descent.

22. Device, according to claim 1, **characterized in that** control module (5) comprises a radio frequency remote control (53).

23. Device, according to claim 7, **characterized in that** motor (24) for rotationally activating cable (4) is vertically aligned with one of the ends of inner passage (31) of guiding module (3) for cable (4).

## Patentansprüche

1. Vorrichtung zur gleichzeitigen Entnahme von Rückenmark, Dura Mater, dem Ursprung der Nervengewebe und von Dorsalwurzelganglien in der Rückenmarkshöhle bei jeder Art von Vieh, wobei die Vorrichtung der Art ist, die ein mit Frässchneidern (41) bestücktes Kabel (4) zur Entnahme des Rückenmarks und der Dura Mater Spinalis der Tiere durch Fräsen, Mittel zur Übertragung einer Dreh- und Vorwärtsbewegung auf das Kabel (4) sowie Mittel zum Halten des unteren Endes des Tieres in einer hängenden Position umfasst, **dadurch gekennzeichnet, dass** es folgende Bauteile umfasst:
- ein Ausgleichsmodul (1) zum Ausgleichen der vom Gewicht des Tieres und dem Zug des Kabels (4) erzeugten vertikalen Kraft, wobei dieses Ausgleichsmodul (1) einen Tisch (11) umfasst, der eine Öffnung (12) zum Einführen des Tierkopfes aufweist und auf einem die Höhe des Tisches (11) regulierenden Mechanismus (13) angeordnet ist,
- ein Aktivierungsmodul (2) zur Erzeugung der Längs- und Drehbewegung des mit dem Frässchneider (41) ausgestatteten Kabels (4), wobei dieses Aktivierungsmodul (2) auf einer Bodenplatte (27) fixierte vertikale Führungen (21), einen auf diesen vertikalen Führungsschienen (21) mittels seitlicher Tragrollen (23) verschiebbaren Karren (22), einen auf der oberen Fläche der Führungen befestigten, motorbetriebenen Wickler (25) zur vertikalen Verschiebung des Karrens (22) mittels eines Zugkabels oder einer Zugkette (26) und einen Motor (24) zur Aktivierung der Rotationsbewegung des Kabels (4) aufweist,
- ein Führungsmodul (3) für das Kabel zwischen dem Ausgleichsmodul (1) und dem Aktivierungsmodul (2), wobei dieses Führungsmodul (3) einen im oberen Teil durch freidrehende Rollen (32) begrenzten Innendurchgang (31) aufweist, und
- ein Steuermodul (5), das aus der Ferne aktiviert werden kann.

2. Vorrichtung nach Anspruch 1, **dadurch gekennzeichnet, dass** das Ausgleichsmodul (1) zum Ausgleich der vertikalen Kraft in seinem unteren Teil mit einer Auffangwanne (14) zur Aufnahme des aus der Rückenmarkshöhle des Tieres entnommenen Risikomaterials ausgestattet ist.

3. Vorrichtung nach Anspruch 1, **dadurch gekennzeichnet, dass** die Öffnung (12) im Tisch (11) eine seitliche Öffnung zum Einführen und Herausziehen des Tierhalses hat.

4. Vorrichtung nach Anspruch 1, **dadurch gekennzeichnet, dass** die Öffnung (12) im Tisch (11) mit einer der endseitigen Öffnungen des Führungsmoduls (3) für das Kabel (4) vertikal in einer Linie steht.

5. Vorrichtung nach Anspruch 1, **dadurch gekennzeichnet, dass** das Aktivierungsmodul (2) außen zumindest in seinem unteren Teil con einem Schutzgitter umgeben ist (28).

6. Vorrichtung nach Anspruch 1, **dadurch gekennzeichnet, dass** die vertikalen Führungen (21) aus zumindest zwei miteinander verbindbaren Abschnitten (21a, 21b) bestehen.

7. Vorrichtung nach Anspruch 1, **dadurch gekennzeichnet, dass** der Motor (24) auf dem verschiebbaren Karren (22) befestigt ist.

8. Vorrichtung nach Anspruch 1, **dadurch gekennzeichnet, dass** das Führungsmodul (3) für das Kabel im Inneren mit einer Reihe von Druckwasserdüsen (36) zur Reinigung des Kabels (4) ausgestattet ist.

9. Vorrichtung nach Anspruch 1, **dadurch gekennzeichnet, dass** die Rollen (32) des Führungsmoduls (3) nur im gebogenen Teil des Innendurchgangs (31) angeordnet sind.

10. Vorrichtung nach Anspruch 1, **dadurch gekennzeichnet, dass** der Innendurchgang (31) des Führungsmoduls (3) für das Kabel mit einer Saugleitung (34) zur Entnahme des aus der Rückenmarkshöhle des Tieres stammenden Risikomaterials ausgestattet ist.

11. Vorrichtung nach Anspruch 1, **dadurch gekennzeichnet, dass** der Innendurchgang (31) des Führungsmoduls (3) unten durch ein konkav geformtes Schutz- oder Abschlusselement (33) begrenzt ist.

12. Vorrichtung nach Anspruch 1, **dadurch gekennzeichnet, dass** das Führungsmodul (3) für das Kabel in seinem oberen Teil über der Rollenbahn (32) zumindest eine Öffnung (35) aufweist, durch die man auf die Rollen (32) zugreifen und diese reinigen kann.

13. Vorrichtung nach Anspruch 1, **dadurch gekennzeichnet, dass** das Kabel (4) einen ersten Abschnitt (4a) und einen zweiten, den Frässchneider (41) tragenden Abschnitt (4b) umfasst.

14. Vorrichtung nach Anspruch 13, **dadurch gekennzeichnet, dass** der erste Abschnitt (4a) und der zweite Abschnitt (4b) des Kabels mit einander ergänzenden Mitteln zur Herstellung einer Schnellverbindung (43, 44) zum gegenseitigen Verbinden und Trennen ausgestattet sind.

15. Vorrichtung nach Anspruch 13, **dadurch gekennzeichnet, dass** die Länge des ersten Abschnitts (4a) des Kabels etwa dem zwischen dem vertikalen Kraftausgleichsmodul (1) und dem unteren Ende der vertikalen Motorbahn (24) bestehenden Abstand entspricht.

16. Vorrichtung nach Anspruch 13, **dadurch gekennzeichnet, dass** die Länge des zweiten Abschnitts (4b) des Kabels etwa dem zwischen dem Transportzug und dem Ausgleichsmodul (1) bestehenden Abstand entspricht.

17. Vorrichtung nach Anspruch 13, **dadurch gekennzeichnet, dass** der Frässchneider (41) am hinteren Ende des zweiten Kabelabschnitts (4b) angeordnet ist.

18. Vorrichtung nach Anspruch 13, **dadurch gekennzeichnet, dass** der erste Abschnitt (4a) des Kabels an seinem vorderen Ende über einen Schnellverbinder (42) zur Verbindung mit einem Schnellverbinder (29) des Motors (24) verfügt.

19. Vorrichtung nach Anspruch 1, **dadurch gekennzeichnet, dass** das Steuermodul (5) in einem am Aktivierungsmodul (2) befestigten Gehäuse angeordnet ist.

20. Vorrichtung nach Anspruch 1, **dadurch gekennzeichnet, dass** das Steuermodul (5) eine SPS (Speicherprogrammierbare Steuerung) zur Steuerung des Geräts umfasst.

21. Vorrichtung nach Anspruch 1, **dadurch gekennzeichnet, dass** das Steuermodul (5) zumindest zwei jeweils in der Nähe des oberen bzw. des unteren Endes der vertikalen Führungen (21) des Aktivierungsmoduls (2) angeordnete, an die SPS angeschlossene EOS-Dedetektoren (51, 52) umfasst, die durch den verschiebbaren Karren (22) bei seiner Auf- und Abwärtsbewegung aktiviert werden können.

22. Vorrichtung nach Anspruch 1, **dadurch gekennzeichnet dass** das Steuermodul (5) eine Funkfernsteuerung (53) umfasst.

23. Vorrichtung nach Anspruch 7, **dadurch gekennzeichnet, dass** der Motor (24) zur Aktivierung der Drehbewegung des Kabels (4) mit einem der Enden des Innendurchgangs (31) des Führungsmoduls (3) für das Kabel (4) vertikal in einer Linie steht.

## Revendications

1. L'invention concerne un dispositif d'extraction simultanée de la moelle épinière, de la dure-mère, origine des tissus nerveux et les ganglions de la racine dorsale, en cavité, de toutes sortes d'animaux d'élevage. Ledit dispositif est du type comprenant: un câble (4) qui supporte des outils de fraisage (41) destinés à extraire la moelle épinière et la dure-mère de l'animal par fraisage, des moyens permettant de transmettre au câble (4) un mouvement de rotation et d'avance, et des moyens destinés à supporter l'extrémité inférieure de l'animal en position de suspension. Le dispositif selon l'invention est **caractérisé en ce qu'**il comprend:
- un module compensateur (1) de l'effort vertical produit par le poids de l'animal et par la traction du câble (4); ledit module compensateur (1) comprend une table (11) dotée d'un orifice (12) pour l'introduction de la tête d'un animal et disposée sur un mécanisme régulateur de la hauteur (13) de la table (11);
- un module d'activation (2) permettant de produire le déplacement longitudinal et la rotation du câble (4) qui supporte l'outil de fraisage (41); ledit module d'activation comprend (2) : des guides verticaux (21) fixés à une base d'ancrage (27), un chariot coulissant (22) disposé sur des guides verticaux (21) moyennant des rouleaux de support latéral (23), un enrouleur motorisé (25), fixé sur la zone supérieure des guides, afin de déplacer le chariot verticalement (22) au moyen d'un câble ou d'une chaîne de traction (26), et un moteur (24) pour l'activation du câble (4) en rotation ;
- un module de guidage (3) du câble entre le module compensateur (1) et le module d'activation (2) ; ledit module de guidage comprend (3) un passage interne (31) limité dans le haut par des rouleaux à rotation libre (32) ; et
- un module de commande (5) pouvant être activé à distance.

2. Dispositif selon la revendication 1, **caractérisé en ce que** le module (1) compensateur de l'effort vertical est doté, dans le bas, d'un plateau (14) destiné à recueillir les matériaux à risque extraits de la cavité médullaire de l'animal.

3. Dispositif selon la revendication 1, **caractérisé en ce que** l'orifice (12) de la table (11) est muni d'un orifice latéral pour l'introduction et le retrait du cou de l'animal.

4. Dispositif selon la revendication 1, **caractérisé en ce que** l'orifice (12) de la table (11) est aligné verticalement sur l'un des orifices extrêmes du module de guidage (3) du câble (4).

5. Dispositif selon la revendication 1, **caractérisé en ce que** le module d'activation (2) est au moins recouvert extérieurement, et dans le bas, par une grille de protection (28).

6. Dispositif selon la revendication 1, **caractérisé en ce que** les guides verticaux (21) sont constitués d'un minimum de deux sections (21a, 21b) qui peuvent être reliées entre elles.

7. Dispositif selon la revendication 1, **caractérisé en ce que** le moteur (24) est fixé au chariot coulissant (22).

8. Dispositif selon la revendication 1, **caractérisé en ce que** le module (3) de guidage du câble est doté, à l'intérieur, d'une série de jets d'eau à pression (36) pour le nettoyage du câble (4).

9. Dispositif selon la revendication 1, **caractérisé en ce que** des rouleaux (32) du module de guidage (3) sont disposés uniquement dans les sections courbes du passage interne (31).

10. Dispositif selon la revendication 1, **caractérisé en ce que** le passage interne (31) du module (3) de guidage du câble est doté d'un conduit d'aspiration (34) destiné à extraire les matériaux à risque issus de la cavité médullaire de l'animal.

11. Dispositif selon la revendication 1, **caractérisé en ce que** le passage interne (31) du module de guidage (3) est limité, dans le fond, par un élément de protection ou élément de finition (33) de forme concave.

12. Dispositif selon la revendication 1, **caractérisé en ce que** le module (3) de guidage du câble est muni, au moins, dans le haut, au-dessus du train à rouleaux (32), d'une ouverture (35) permettant d'accéder auxdits rouleaux (32) et de procéder à leur nettoyage.

13. Dispositif selon la revendication 1, **caractérisé en ce que** le câble (4) comprend une première section (4a) et une seconde section (4b) qui supportent l'outil de fraisage (41).

14. Dispositif selon la revendication 13, **caractérisé en ce que** la première section (4a) et la seconde section (4b) du câble comprennent des moyens complémentaires de raccord rapide (43, 44) permettant leur raccordement ou séparation.

15. Dispositif selon la revendication 13, **caractérisé en ce que** la première section (4a) du câble a une longueur similaire à la distance existante entre le module vertical compensateur d'effort (1) et le fond du parcours vertical du moteur (24).

16. Dispositif selon la revendication 13, **caractérisé en ce que** la seconde section (4b) du câble a une longueur similaire à la distance existante entre le train transporteur et le module de compensation (1).

17. Dispositif selon la revendication 13, **caractérisé en ce que** l'outil de fraisage (41) est disposé à l'extrémité postérieure de la seconde section (4b) du câble.

18. Dispositif selon la revendication 13, **caractérisé en ce que** la première section (4a) du câble est munie, sur son extrémité avant, d'un raccord rapide (42) permettant de le relier à un raccord rapide (29) du moteur (24).

19. Dispositif selon la revendication 1, **caractérisé en ce que** le module de commande (5) est placé dans une boîte montée sur le module d'activation (2).

20. Dispositif selon la revendication 1, **caractérisé en ce que** le module de commande (5) comprend un automate programmable sur PC permettant de contrôler le dispositif.

21. Dispositif selon la revendication 1, **caractérisé en ce que** le module de commande (5) comprend, au moins, deux détecteurs de fin de course (51, 52) reliés à l'automate programmable et placés dans des zones proches des extrémités supérieure et inférieure des guides verticaux (21) du module d'activation (2) ; ces détecteurs peuvent être activés par le chariot coulissant (22) lors de sa montée et de sa descente.

22. Dispositif selon la revendication 1, **caractérisé en ce que** le module de commande (5) comprend une télécommande (53) à radiofréquence.

23. Dispositif selon la revendication 7, **caractérisé en ce que** le moteur (24) pour l'activation du câble (4) en rotation est aligné verticalement sur l'une des extrémités du passage interne (31) du module de guidage (3) du câble (4).
